# EUROPÄISCHE PATENTSCHRIFT

(11) **EP 1 104 078 B1**
(45) Veröffentlichungstag und Bekanntmachung des Hinweises auf die Patenterteilung: **22.04.2009**
(21) Anmeldenummer: 00122584.6
(22) Anmeldetag: 17.10.2000
(51) Int. Cl.: H02K 5/128

(54) **Elektrische Maschine mit einem Rotor mit eingepressten Stirnblechen**
Electrical machine with a rotor having pressed-in frontsheets
Machine électrique avec un rotor muni de tôles frontales emmanchées à force

(30) Priorität: 17.11.1999 DE 19955452
(43) Veröffentlichungstag der Anmeldung: 30.05.2001
(73) Patentinhaber: WILO SE, 44263 Dortmund (DE)
(72) Erfinder: Kaul, Günter, 58456 Witten (DE)
(74) Vertreter: COHAUSZ DAWIDOWICZ HANNIG & SOZIEN

(56) Entgegenhaltungen:
- DE-A- 3 230 699
- DE-U- 29 504 640
- US-A- 3 667 870
- PATENT ABSTRACTS OF JAPAN vol. 6, no. 150 (M-148), 10. August 1982 (1982-08-10) & JP 57 068589 A (NIKKISO CO LTD), 26. April 1982 (1982-04-26)
- PATENT ABSTRACTS OF JAPAN vol. 18, no. 667 (E-1645), 15. Dezember 1994 (1994-12-15) -& JP 06 261487 A (MITSUBISHI ELECTRIC CORP), 16. September 1994 (1994-09-16)
- PATENT ABSTRACTS OF JAPAN vol. 1995, no. 9, 31. Oktober 1995 (1995-10-31) -& JP 07 143698 A (MITSUBISHI ELECTRIC CORP), 2. Juni 1995 (1995-06-02)

## Beschreibung

Die Erfindung betrifft eine elektrische Maschine insbesondere einen Elektromotor zum Betrieb einer Spaltrohrpumpe, mit einem auf einer Welle aufsitzenden und Permanentmagneten aufweisenden insbesondere als Rotorpaket ausgebildeten Rotor, der zur Abdichtung von einer Hülse aus Blech umgeben ist.

Insbesondere bei elektrisch betriebenen Spaltrohrpumpen, wo ein Spalttopf den Magneten tragenden Rotor vom Stator trennt, ist es bekannt, den Rotor gegen das ihn umgebende Medium abzudichten. Eine derartige Abdichtung ist einerseits notwendig, um die empfindlichen Permanentmagneten gegen Korrosion zu schützen. Gleichzeitig schließt die Hülse das Rotorpaket ab und hält es mechanisch zusammen.

Die bislang bekannten, mit einer Hülse gekapselten Rotoren sind insofern aufwendig herzustellen, als zunächst der mit Permanentmagneten bestückte Magnetträger oder Tragkörper von einer Hülse umgeben wird, bevor auf die Stirnflächen des Magnetträgers Deckscheiben aufgesetzt werden. Der Rotor muß hierfür eng tolerierte Außendurchmesser und eine runde Form besitzen, damit die im Allgemeinen verwendete Edelstahlhülse in einem Preßvorgang montiert werden kann. Die Deckscheiben sind gegenüber dem Magnetträger und der Welle mittels eingelegter O-Ringe abgedichtet. Nach dem , Zusammenfügen der einzelnen Bauteile werden die Enden der Hülse mechanisch umgebördelt, so daß sie den jeweiligen Rand der Deckscheibe umgreifen und halten. Dabei führt das Biegen des Bleches wegen des federnden Materiales zu erheblichen Schwierigkeiten

Problematisch an den bislang bekannten Rotoren ist weiterhin, daß trotz dies hohen mechanischen Aufwandes eine absolute Dichtigkeit nicht garantiert werden kann. So kommt es insbesondere durch eine mangelhafte Bördelung zu Leckagen und nach dem Eindringen des Pumpmediums zu einer Zerstörung der emfindlichen insbesondere aus einer Neodym-Eisen-Bor-Legierung gefertigten Magnete.

Aus der JP 08322173 ist es bekannt, zu beiden Seiten der Rotorenhülse je eine Abdeckscheibe in den überstehenden Hülsenrand einzupressen.

Aufgabe der Erfindung ist es, eine elektrische Maschine zu schaffen, deren auf der Welle aufgebrachtes Rotorpaket von einer nach Außen hin dichten Hülse umgeben ist, wobei der Rotor unter Gewährleistung hoher Dichtigkeit auf einfache Weise kostengünstig gekapselt ist.

Diese Aufgabe wird durch die Maschine nach Anspruch 1 gelöst, Um die Gefahr von Leckstellen zu reduzieren ist es vorteilhaft, zwischen der Abdeckscheidbe und dem Rotorpaket eine oder mehrere Dichtungen vorzusehen, die vorteilhafterweise von eingelegten O-Ringen gebildet werden.

Auf diese Weise sind die vorteilhafterweise in Spaltrohrmotorpumpen eingesetzten Rotorpakete vor dem Eindringen von Pumpmedium und damit vor Korrosion sicher geschützt. Wegen der verminderten Korosion werden die Abtragungen durch das Pumpmedium reduziert und damit die Gefahr von Lagerschäden, die im Extremfalle zu Blockierungen führen können, minimiert.

Die erfindungsgemäßen Maschinen können demnach problemlos mit modernen Hochleistungsmagneten ausgerüstet werden, deren Schutz wegen der absoluten Dichtigkeit der Ummantelung gewährleistet ist. Dabei sei anzumerken, daß unter einem Rotorpaket nicht nur ein Stapel von Blechen, sondern alle von der Hülse umgebenen Komponenten, wie die Bleche und die in entsprechenden Trägern gehaltenen Magneten, verstanden werden sollen. Um zudem eine absolute Dichtigkeit der Abdeckscheibe gegenüber der vom Rotor umgebenen Welle zu gewährleisten ist auch die Abdeckscheibe über eine Preßpassung auf der Welle befestigt. Dabei ist es von Vorteil, daß die Preßpassungen neben der Dichtigkeit zudem einen stabilen mechanschen Halt bieten. Somit kann das Rotorpaket mit Spiel auf die Welle aufgesetzt und vermittels zweier auf die Stirnseiten aufgepreßter Abdeckbleche auf der Welle fixiert werden. Eine zusätzliche Befestigung beispielsweise durch zusätzliches Verkleben, Verlöten oder Verschweißen ist dabei nicht mehr erforderlich.

In einer vorteilhaften Ausführungsform sind einerseits die Hülse und andererseits die Abdeckbleche aus nichtrostendem Blech gefertigt. Dabei ist es vorteilhaft, wenn die Teile in axialer Richtung tiefgezogen sind, weil dadurch eine Oberflächenstruktur entsteht, die den Fügeprozeß beim Einpressen begünstigt. Zur weiteren Vereinfachung des Einpressens ist es vorteilhaft, wenn die Abdeckplatte an den Stellen der Preßsitze angeformte Kragen aufweist, die im einfachsten Falle ebenfalls durch ein verformendes Ziehen entstehen. Die Kragen bieten eine geringe Elastizität, die einerseits die Abdichtung begünstigt und andererseits den zum Einpressen benötigten Druck, den die Werkzeuge ausüben müssen, mindert. Das Einpressen kann daher besonders kontrolliert und damit exakt geschehen. Die durch die Form und die Wandstärke vorgegebenen Eigenschaften der Bleche werden somit für einen schonenden Fertigungsprozeß genutzt.

Besonders einfach ist der Rotor der erfindungsgemäßen Maschine aufgebaut, wenn beide Stirnseiten symmetrisch von identischen Abdeckplatten bedeckt sind. Das beidseitige Verpressen kann mit einer dosierten (weichen) Krafteinwirkung geschehen, was zu einer weiteren Schonung der Bleche und des Rotors beiträgt. Ein schonender Preßvorgang wirkt sich besonders vorteilhaft auf die im Rotor befindlichen Magnete aus, die wegen ihres spröden Materiales durch starke und stoßweise Krafteinwirkung leicht in Mitleidenschaft gezogen werden können.

Besonders vorteilhaft für den Fügeprozeß ist es, wenn die Abdeckplatte keine scharfen sondern durch Phasen angeschrägte (angephaste) Kanten aufweist. Die Bauteile zentrieren sich damit beim Aufsetzen selbst, was die Fertigung des Rotors vereinfacht und den Ausschuß minimiert. Es ist hierbei besonders vorteilhaft, diese O-Ringe in die von den angephasten Kanten gebildeten Nuten zu legen.

Die erfindungsgemäße Befestigung des Rotorpaketes auf der Welle läßt sich für Wellen aus beliebigem Material einsetzen. Besonders vorteilhaft werden jedoch Wellen aus Metall oder Keramik verwendet. Dabei bietet die Art der Preßpassung auf Keramikwelle den besonderen Vorteil, daß die gewisse Elastizität der Kragen gegenüber der harten Welle diese schont und die Gefahr des Brechens minimiert.

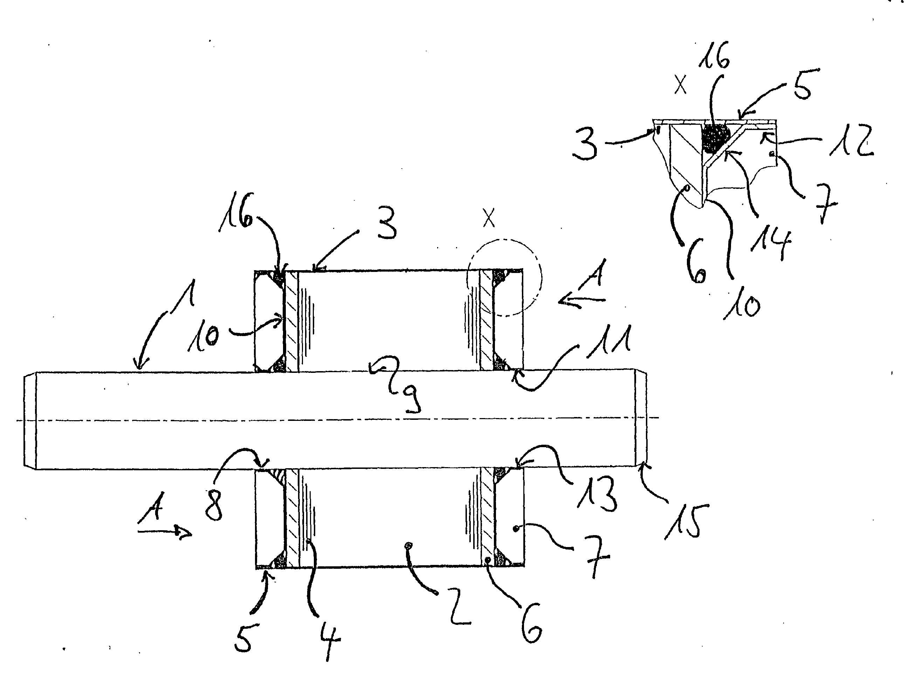

Eine besondere Ausführungsform eines erfindungsgemäßen Rotors ist in der Zeichnung dargestellt und wird im folgenden näher beschrieben.

In der Figur ist ein auf eine Welle 1 aufsetztes Rotorpaket 2 dargestellt. Das Rotorpaket 2 ist für den Einsatz in einer nicht dargestellten elektrischen Maschine, insbesondere einem Elektromotor zum Betrieb einer Spattrohrpumpe, geeignet. Zum Schutze und zur Abdichtung der nicht dargestellten Magneten und der Blechpakete 4 ist das Rotorpaket 2 von einer aus nichtrostendem Blech gezogenen zylindrischen Hülse 3 umgeben.

Erfindungsgemäß ist weist die Hülse 3 einen Rand 5 (Detailzeichnung X) auf, der das Rotorpaket 2 stirnseitig überragt und somit eine topfförmige Aufnahme bildet. Dabei sind die Stirnseiten der Blechpakete 4 von ringförmigen die Hülse 3 tragenden Endstücken 6 abgeschlossen, die aus Blech oder Kunststoff geformt sind und einen Teil der einer Magnethalterung bilden können. In die beiden von der Hülse 3 gebildeten Aufnahmen sind zu beidseitig Abdeckscheiben 7 eingepreßt, deren Außendurchmesser etwa dem Innendurchmesser der Aufnahme entsprechen. Die Abdeckscheiben 7 sind zudem über eine Preßpassung 8 auf der Welle 1 gehalten, während das Rotorpaket 2 über eine enge Spielpassung 9 auf der Welle 1 aufsitzt.

Eine Abdeckscheibe 7 weist eine ebene am Rotorpaket 2 anliegende Deckplatte 10 mit einer zentralen Bohrung 11 auf und hat an ihrem Umfang einen angeformten äußeren Kragen 12, der über eine Preßpassung an der Innenfläche der Aufnahme anliegt. Die Bohrung 11 ist ebenfalls von einem inneren Kragen 13 umgeben, der mit der Preßpassung 8 an der Welle 1 anliegt. Die Kragen 12 und 13 sind beim Tiefziehen der Abdeckscheibe 7 geformt und weisen in axialer Richtung von den Endstücken 6 weg. Somit bildet eine Abeckscheibe 7 ein U-Profil mit senkrecht zur Deckplatte 10 ausgerichteten je einen Kragen bildenden Schenkeln. Um das Einpressen der Abeckplatten 7 in Pfeilrichtung A zu vereinfachen, sind die von den Schenkeln und der Deckplatte 10 gebildeten Kanten mit einer Schräge 14 versehen, die im einfachsten Fall von einer Phase gebildet wird. Auch die Welle 1 weist an ihren Stirnseiten Phasen 15 auf, über welche die Abeckplatten 7 rutschen.

Im vorliegenden Ausführungsbeispiel sind zwischen einer Abdeckscheibe 7 und dem Rotorpaket 2 O-Ring Dichtungen 16 vorgesehen, die während des Fügeprozesses eingelegt werden.

## Patentansprüche

1. Elektrische Maschine, insbesondere Elektromotor zum Betrieb einer Spaltrohrpumpe, mit einem auf einer Welle aufsitzenden und Permanentmagneten aufweisenden Rotor, der zur Abdichtung von einer Hülse aus Blech umgeben ist, wobei die Hülse (3) den Rotor (2) stirnseitig überragt und der überstehende Rand (5) der Hülse (3) eine randförmige Aufnahme bildet, in die eine die Stirnseite des Rotors (2) abdeckende Abdeckscheibe (7) eingepreßt ist, **dadurch gekennzeichnet, dass** die Abdeckscheibe (7) über eine Preßpassung auf der Welle (1) befestigt ist und dass zwischen der Abdeckscheibe (7) und dem Rotorpaket (2) eine Dichtung insbesondere eine O-Ring-Dichtung (16) eingelegt ist,

2. Maschine nach Anspruch 1, **dadurch gekennzeichnet, dass** die Hülse (3) aus nichtrostendem Blech gefertigt insbesondere gezogen ist.

3. Maschine nach Anspruch 1 oder **2 dadurch gekennzeichnet, dass** die Abdeckscheibe (7) eine ebene Deckplatte (10) mit einer zentralen Bohrung (11) aufweist, die einen am äußeren Umfang angeformten äußeren Kragen (12) hat, wobei die Deckplatte (10) am Rotorpaket (2) anliegt und wobei der vom Rotor (2) abgewandte äußere Kragen (12) über eine Preßpassung an der Innenfläche der Aufnahme anliegt.

4. Maschine nach Anspruch 3, **dadurch gekennzeichnet, dass** die Abdeckscheibe (7) einen die zentrale Bohrung (11) umgebenden inneren Kragen (13) aufweist, der mit Preßpassung (8) an der Welle (1) anliegt.

5. Maschine nach einem der vorherigen Ansprüche,
**dadurch gekennzeichnet, dass** die Abdeckscheibe (7) aus nichtrostendem Blech gezogen ist

6. Maschine nach einem der vorherigen Ansprüche,
**dadurch gekennzeichnet, dass** der Rotor (2) beidseitig von je einer Abdeckscheibe (7) bedeckt ist.

7. Maschine nach einem der vorherigen Ansprüche,
**dadurch gekennzeichnet, dass** die Abeckscheibe (7) ein U-Profil mit senkrecht zur Deckplatte (10) ausgerichteten je einen Kragen (12,13) bildenden Schenkeln aufweist, wobei die von einem Schenkel und der Deckplatte (10) gebildete Kante (14) angephast ist.

8. Maschine nach einem der vorherigen Ansprüche,
**dadurch gekennzeichnet, dass** der Rotor (2) mit Spielpassung (9) auf die Welle (1) aufgesetzt ist.

9. Maschine nach einem der vorherigen Ansprüche,
**dadurch gekennzeichnet, dass** die Welle (1) aus einer Keramik gefertigt ist.

10. Maschine nach einem der vorherigen Ansprüche,
**dadurch gekennzeichnet, dass** der Rotor (2) zylindrisch geformt ist und einen Magnetträger, insbesondere aus Kunststoff, aufweist, der die Permanentmagneten trägt und der in axialer Richtung mit zwei planen Stirnwänden abschließt, wobei eine Deckplatte (10) an einer Stirnwand anliegt.

## Claims

1. Electrical machine, particularly an electric motor for operating a canned pump, with a rotor with permanent magnets on a shaft, which is surrounded by a casing made of metal sheet for sealing, in which the casing (3) projects over the rotor (2) at the front and the overhanging edge (5) of the casing (3) forms a peripheral type housing, into which a sealing plug (7) covering the front of the rotor (2) is pressed, **characterised in that** the sealing plug (7) is fastened to the shaft (1) through a packing and that a seal, particularly an O ring seal (16), is inserted between the sealing plug (7) and the rotor plate (2).

2. Machine according to claim 1, **characterised in that** the casing (3) is made, particularly drawn, from stainless sheet,

3. Machine according to claim 1 or 2, **characterised in that** the sealing plug (7) has a flat cover plate (10) with a central hole (11), which has an external collar (12) formed on the external circumference, in which the cover plate (10) lies flat against the rotor plate (2) and in which the external collar (12) turned away from the rotor (2) lies flat against the internal surface of the housing through a packing.

4. Machine according to claim 3, **characterised in that** the sealing plug (7) has an internal collar (13) surrounding the central hole (11), which lies flat against the shaft (1) with a packing (8).

5. Machine according to one of the previous claims,
**characterised in that** the sealing plug (7) is drawn from stainless metal sheet.

6. Machine according to one of the previous claims,
**characterised in that** the rotor (2) is covered on both sides with a sealing plug (7).

7. Machine according to one of the previous claims,
**characterised in that** the sealing plug (7) has a U section with arms arranged perpendicular to the cover plate (10), each forming a collar (12, 13), in which the edge (14) formed by an arm and the sealing plug (10) is bevelled.

8. Machine according to one of the previous claims,
**characterised in that** the rotor (2) is put on the shaft (1) with a clearance fit (9).

9. Machine according to one of the previous claims,
**characterised in that** the shaft (1) is made of a ceramic.

10. Machine according to one of the previous claims,
**characterised in that** the rotor (2) is made cylindrical in shape and has a magnet carrier, particularly made of plastic, which carries the permanent magnets and which ends in two flat front walls in the axial direction, in which a cover plate (10) lies flat against one front wall.

## Revendications

1. Machine électrique, en particulier moteur électrique pour le fonctionnement d'une pompe à moteur à stator chemisé, comprenant un rotor reposant sur un arbre et muni d'aimants permanents, qui est entouré d'une gaine de tôle pour l'étanchéité, la gaine (3) dépassant du rotor (2) du côté frontal et le bord en saillie (5) de la gaine (3) formant un logement en forme de rebord, dans lequel est emmanché à force un disque de couverture (7) recouvrant le côté frontal du rotor (2), **caractérisée en ce que** le disque de couverture (7) est fixé sur l'arbre (1) par l'intermédiaire d'un ajustement sans jeu et qu'une garniture d'étanchéité, en particulier un joint torique (16), est insérée entre le disque de couverture (7) et le paquet de rotor (2).

2. Machine suivant la revendication 1, **caractérisée en ce que** la gaine (3) est fabriquée en tôle inoxydable, en particulier emboutie.

3. Machine suivant l'une des revendications 1 et 2,
**caractérisée en ce que** le disque de couverture (7) présente une plaque de couverture (10) plane avec un alésage central (11), laquelle plaque est pourvue d'un collet extérieur (12) conformé sur le pourtour extérieur, la plaque de couverture (10) s'appliquant sur le paquet de rotor (2) et le collet extérieur (12), opposé au rotor (2), s'appliquant sur la surface intérieure du logement par l'intermédiaire d'un ajustement sans jeu.

4. Machine suivant la revendication 3, **caractérisée en ce que** le disque de couverture (7) présente un collet intérieur (13) qui entoure l'alésage central (11) et s'applique sur l'arbre (1) avec un ajustement sans jeu (8).

5. Machine suivant l'une des revendications précédentes, **caractérisée en ce que** le disque de couverture (7) est embouti à partir d'une tôle inoxydable.

6. Machine suivant l'une des revendications précédentes, **caractérisée en ce que** le rotor (2) est recouvert bilatéralement par un disque de couverture (7).

7. Machine suivant l'une des revendications précédentes,
**caractérisée en ce que** le disque de couverture (7) présente un profil en U avec des branches orientées perpendiculairement à la plaque de couverture (10) et formant chacune un collet (12, 13), l'arête (14), formée par une branche et par la plaque de couverture (10), étant chanfreinée.

8. Machine suivant l'une des revendications précédentes, **caractérisée en ce que** le rotor (2) est mis en place sur l'arbre (1) avec un ajustement avec jeu (9).

9. Machine suivant l'une des revendications précédentes, **caractérisée en ce que** l'arbre (1) est fabriqué en une céramique.

10. Machine suivant l'une des revendications précédentes, **caractérisée en ce que** le rotor (2) est formé en cylindre et présente un porte-aimants, en particulier en matière plastique, qui supporte les aimants permanents et ferme dans la direction axiale par deux parois frontales planes, une plaque de couverture (10) s'appliquant alors sur une paroi frontale.
